# EUROPEAN PATENT SPECIFICATION

(11) **EP 0 949 435 B1**
(45) Date of publication and mention of the grant of the patent: **19.10.2005**
(21) Application number: 99105118.6
(22) Date of filing: 25.03.1999
(51) Int. Cl.: F16H 55/17, B21K 1/30, F16D 23/02

(54) **Gear with integrated clutch spline and its forming method**
Zahnrad mit integrierter Kupplungsverzahnung und dessen Herstellung
Engrenage avec denture d'accouplement integrée et sa méthode de fabrication

(30) Priority: 08.04.1998 JP 9596698
(43) Date of publication of application: 13.10.1999
(73) Proprietor: Mitsubishi Steel MFG. CO., LTD., Tokyo (JP)
(72) Inventor: Kobayashi, Akio, Mitsubishi Steel Mfg. Co. Ltd, Utsunomiya-shi, Tochigi 321-0905 (JP); Fukasawa, Hidekazu, Mitsubishi Steel Mfg. Co. Ltd., Utsunomiya-shi, Tochigi 321-0905 (JP)
(74) Representative: Fiener, Josef

(56) References cited:
- EP-A- 0 552 021
- DE-A- 19 744 639
- US-A- 4 938 089
- PATENT ABSTRACTS OF JAPAN vol. 014, no. 491 (M-1040), 25 October 1990 (1990-10-25) & JP 02 200341 A (MITSUBISHI MOTORS CORP), 8 August 1990 (1990-08-08)

## Description

### BACKGROUND OF THE INVENTION

### 1. Field of the Invention

The present invention relates to a gear for a transmission used in a manual transmission or the like of an automobile or the like and a method of forming thereof. Such a gear disclosing the pre-characterizing features of claim 1, is known from US-A-4,938,089, wherein the pre-characterizing features of method claim 3 are shown in JP-A-2 200 341.

### 2. Description of the Prior Art

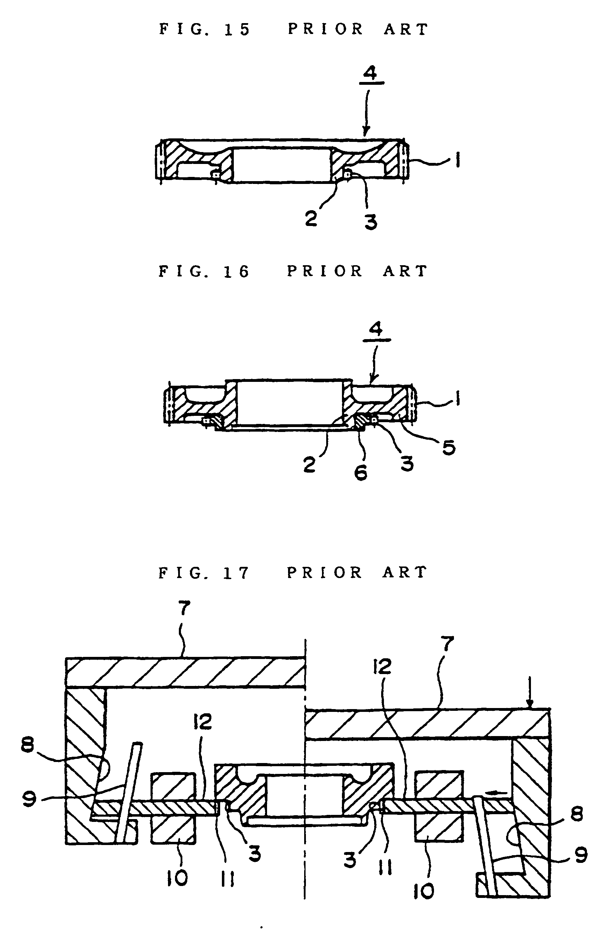

As shown in Fig. 15, a gear for a transmission used in a manual transmission or the like of an automobile or the like is provided with a main gear portion 1 at its outer periphery and a clutch gear portion 3 is provided on the outer periphery of a boss portion 2 on the inner side to thereby constitute a transmission gear 4.

Conventionally, in forming such a transmission gear 4, the clutch gear portion 3 and the main gear portion 1 are cut by machining from a gear material formed by hot forging or cold forging and accordingly, the difference between the outer diameter of the clutch gear portion 3 and the inner diameter of the main gear portion 1 is large. This also applies for the above-cited documents, such that the cost and strength problems discussed in the following are caused.

Further, conventionally, as another method of forming a transmission gear, as shown in Fig. 16, there has been adopted a method in which a clutch gear part 6 having a clutch gear portion 3 fabricated in a ring-like shape by cold forging or machining is fitted to the outer periphery of the boss portion 2 of a main gear part 5 in which the main gear portion 1 is formed by hot forging or cold forging and is machined and welded thereto by electron beam welding or it is spline pressed thereto to thereby couple integrally the main gear part 5 to the clutch gear part 6 (hereinafter, this type will be referred to as a couple type), or the main gear part 5 and the clutch gear part 6 are fabricated by hot forging, the both are integrally formed by composite forging of hot plus cold forging and only cold forging and a part thereof is machined to thereby finish the transmission gear 4, see for instance JP-2 200 341-A.

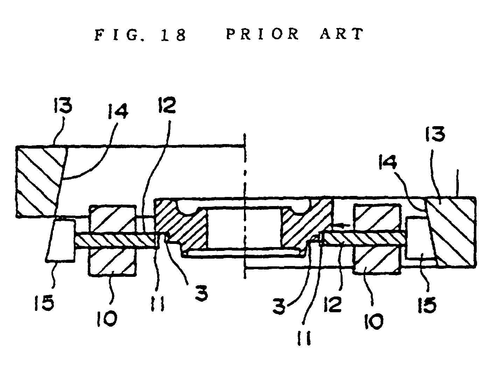

Further, in the case of the type in which teeth of the clutch gear portion 3 are not recessed from side face of the main gear portion, in order to subject the item to inverse taper forming to decrease the dimensions of the teeth roots, an apparatus of Fig. 17 or Fig. 18 has conventionally been used.

Left halves of Fig. 17 and Fig. 18 show states before operation and right halves show states in operation. In the apparatus of Fig. 17, an inclined face 8 a lower portion of which is inclined outward is formed at a lower portion of the inner face of a punch 7 capable of moving vertically and a guide pin 9 is fixed in the inner side of a lower end of the punch 7 in parallel with the inclined face 8.

A holder 10 in a fixed state is provided on the inner side of the punch 7, a horizontal forming pin 12 having a cutting edge 11 at its front end slidably penetrates the holder 10 and the base end of the forming pin 12 is in contact with the inclined face 8. Further, the cutting edge 11 at the front end of the forming pin 12 is opposed to the clutch gear portion 3.

As shown in the right half of Fig. 17, when the punch 7 is pushed down, the forming pin 12 is slid toward the center side by being pushed by the inclined face 8 and the guide pin 9 and the cutting edge 11 bites the clutch gear portion 3 to thereby carry out inverse taper machining of the tooth of the clutch gear portion 3.

In the apparatus of Fig. 18, an inclined face 14 a lower portion of which is inclined outward is formed on the inner face of a punch 13 capable of moving up and down. A holder 10 in a fixed state is provided on the inner side of the punch 13, a horizontal forming pin 12 having a cutting edge 11 at its front end slidably penetrates the holder 10 and a guide block 15 having the same inclined face having the same inclination as the inclination of the inclined face 14 on the outer side thereof is fixed to the base end of the forming pin 12. Further, the cutting edge 11 at the front end of the forming pin 12 is opposed to the clutch gear portion 3.

As shown in the right half of Fig. 18, when the punch 13 is pushed down, the guide block 15 is pushed by the inclined face 14. In accordance therewith, the forming pin 12 is slid toward the center and the cutting edge 11 bites the clutch gear portion 3 to thereby carry out inverse taper machining of the tooth of the clutch gear portion 3.

As shown in Fig. 15 and Fig. 16, in the case of a transmission gear 4 in which the difference between the outer diameter of the clutch gear portion 3 and the inner diameter of the main gear portion 1 is small at a position at which the clutch gear portion 3 is deeply recessed from the end face of the main gear portion 1, there is a problem that the clutch gear portion 3 is not successfully processed by means of cutting the clutch gear portion 3 and the main gear portion 1 which have been prepared from the gear material by hot forging or cold forging.

Further, as shown in Fig. 16, by the method of fabricating the coupling type of the main gear part 5 and the clutch gear part 6, the main gear portion 1 and the clutch gear portion 3 are separately fabricated and accordingly, there is a problem that the machining steps are complicated, a long fabricating time is needed, the cost is high, the strength is weak, and the accuracy of the concentricity between the main gear portion 1 and the clutch gear portion 3 is poor.

Further, in the case of the apparatus of Fig. 17 for subjecting a tooth of the clutch gear portion 3 to inverse taper, there is a problem that the structure is complicated, the price is high and the strengths of the guide pin 9 and the forming pin 12 are low. In the case of the apparatus of Fig. 18, although the structure is simple and the price is low, there is a problem that the strength of the forming pin 12 is low.

### SUMMARY OF THE INVENTION

It is an object of the present invention to provide an integrated type gear for a transmission the fabrication of which is facilitated, the strength of which is strong and in which the difference between the outer diameter of a clutch gear portion and the inner diameter of a main gear portion is 12 mm or less (hereinafter, this will be described using the expression that the difference between the outer diameter of the clutch gear portion and the inner diameter of the main gear portion is small), the clutch gear portion is recessed from a side face of the main gear portion, and the main gear portion and the clutch gear portion are integrally fabricated and formed not separately from the materials to the products (hereinafter, referred to as an integrated type) and a method of forming thereof by simple steps.

The invention of Claim 1 relates to an integrated type gear for a transmission wherein the integrated type gear comprises a main gear portion for a synchronizing mechanism of the transmission and a clutch gear portion formed integrally with a side face of the main gear portion, the clutch gear portion is provided with spline teeth each having a chamfer at a front end thereof and an inverse taper and is recessed from the side face of the main gear portion, and the difference between the outer diameter of the clutch gear portion and the inner diameter of the main gear portion is 12 mm or less. There is provided a gear for a transmission the strength of which is increased and the fabrication of which is facilitated since the main gear portion and the clutch gear portion are integrated.

Claim 2 relates to an integrated type gear for a transmission identical to claim 1 wherein the spline teeth are provided with intermittent spaces corresponding to an appropriate number of teeth. Calculation shows that the strength of an inverse taper forming plate can substantially be tripled by omitting teeth alternately compared with that in cases where all of the teeth are provided. Further, considering the failure stress of a die, it is considered that breakage is unavoidable because of influence of fatigue or the like in cases where all the teeth are provided, but the gear can withstand sufficiently in view of strength by omitting teeth alternately. Further, by omitting teeth alternately or omitting part of teeth in every two or more teeth, lightweight of the entire gear is achieved. Further, even with omission of teeth, gears are in mesh with each other as a whole and accordingly, the strength of the teeth of the clutch gear is not a problem.

When each of the spaces corresponding to an appropriate number of teeth of the clutch gear portion has a recessed shape bent toward the central axis of the clutch gear portion, there is no corner in a forming die and the life of the die is further promoted.

The invention of Claim 3 relates to a method of forming an integrated type gear for a transmission wherein there are provided an upper die, and a lower die comprising a segment guide for externally fitting a partially fabricated item in which the clutch gear portion having spline teeth is recessed from a side face of a main gear portion, and the difference between the outer diameter of the clutch gear portion and the inner diameter of the main gear portion is small; an inverse taper forming segment having forming teeth provided outside the segment guide and on a forming arm, and externally fitted to the clutch gear portion of the partially fabricated item, the forming teeth being shaped into a narrower width at a side which abuts the chamber portion of the spline teeth to be formed than the width at the other side which abuts the root portion of the spline teeth to be formed; and a taper die fitted to the outside of the inverse taper forming segment and formed with a taper on the inner peripheral face thereof; and wherein after externally fitting the partially fabricated item to the segment guide of the lower die, the partially fabricated item is pressed by the upper die and the lower die, and both the inverse taper forming segment and the partially fabricated item are lowered to thereby slide the inverse taper forming segment toward the central axis of the partially fabricated item along the inner peripheral face of the taper die and to thereby form inverse tapers on the spline teeth of the clutch gear portion of the partially fabricated item by the teeth of the inverse taper forming segment. Thus an integrated gear for a transmission according to Claim 1 can be formed by an apparatus having excellent strength.

The invention of Claim 4 relates to a method of forming an integrated type gear for a transmission according to Claim 8, wherein the lower die is provided with an inverse taper forming segment so designed that the difference between the outer diameter of the clutch gear portion and the inner diameter of the main gear portion is small and the dimension in the circumferential direction of the teeth is large; and after externally fitting to the segment guide of the lower die the partially fabricated item in which the difference between the outer diameter of the clutch gear portion and the inner diameter of the main gear portion is small and intermittent spaces corresponding to an appropriate number of teeth are provided among the teeth, the partially fabricated item is pressed by the upper die and the lower die to thereby form inverse tapers on the spline teeth of the clutch gear portion of the partially fabricated item. An integrated gear for a transmission according to Claim 2 having an improved strength can be formed.

### BRIEF DESCRIPTION OF THE DRAWINGS

Fig. 1 is a sectional view showing a mode of a transmission gear according to the invention.
Fig. 2 is a half-cut plan view of Fig. 1.
Fig. 3 is an enlarged sectional view showing a mode of a spline tooth having inverse taper.
Fig. 4 is a half-cut plan view showing another example of a transmission gear according to the invention.
Fig. 5 is a sectional view of Fig. 4.
Fig. 6 is a half-cut plan view showing still another mode of a transmission gear according to the invention.
Fig. 7 is a sectional view showing an example of an apparatus used in a method of forming the invention.
Fig. 8 is a plan view showing an example of an inverse taper forming segment used in the forming method of the invention.
Fig. 9 is a front view of Fig. 8.
Fig. 10 is a right side view of Fig. 8.
Fig. 11 is a plan view showing another example of an inverse taper forming segment used in the forming method of the invention.
Fig. 12 is a right side view of Fig. 11.
Fig. 13 is a plan view showing still another example of an inverse taper forming segment used in the forming method of the invention.
Fig. 14 is a sectional view showing an operating state of the apparatus shown in Fig. 7.
Fig. 15 is a sectional view showing an example of a conventional transmission gear.
Fig. 16 is a sectional view showing another example of the conventional transmission gear.
Fig. 17 is a sectional view showing an example of an apparatus used in a conventional forming method.
Fig. 18 is a sectional view showing another example of an apparatus used in the conventional forming method.

### Detailed Description of the PREFERRED EMBODIMENTS

A description will be given below of a mode of the invention with reference to the drawings.

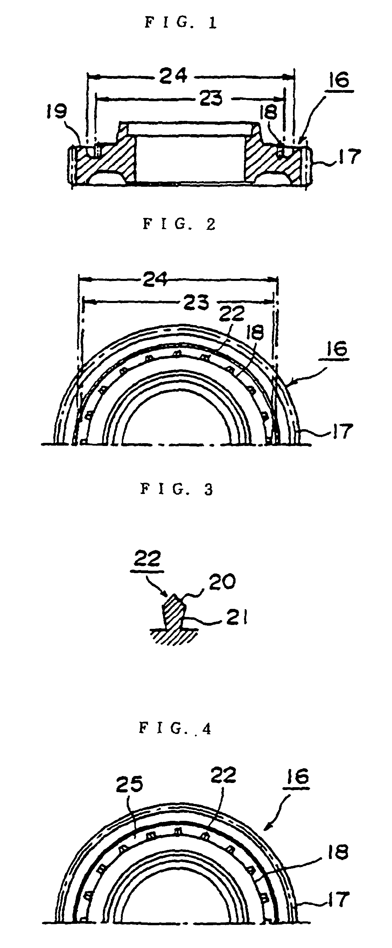

Fig. 1 is a sectional view showing a mode of an integrated type gear for a transmission of the invention, and Fig. 2 is a half-cut plan view of Fig. 1 in which a transmission gear 16 is provided with an integration of a main gear portion 17 for a synchronizing mechanism of a transmission provided on the outer periphery thereof and a clutch gear portion 18. As shown in Fig. 1, the clutch gear portion 18 is recessed inward from a side face 19 of the main gear portion 17 and as shown in an enlarged sectional view of Fig. 3, the clutch gear portion 18 is provided with spline teeth 22 each having chamfers 20 and inclined faces of inverse taper 21 by which the tooth root is narrowed. Spline teeth 22 are alternately omitted.

Further, the difference between the outer diameter 23 of the clutch gear portion 18 and the inner diameter 24 of the main gear portion 17 is 12 mm or less. Therefore the dimension is smaller than a conventional one.

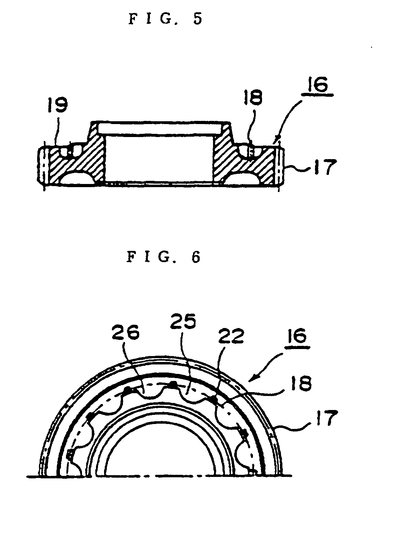

Fig. 4 is a half-cut plan view showing another mode of the transmission gear 16 of the invention. Fig. 5 is a sectional view of Fig. 4 in which similarly to the mode of Fig. 1 through Fig. 3, a main gear portion 17 and a clutch gear portion 18 are integrated, the clutch gear portion 18 are recessed inward from a side face 19 of the main gear portion 17. Although illustration is omitted, there are provided a spline teeth 22 each having chamfers 20 and inclined faces of inverse taper 21 similar to that of Fig. 3 and the difference between the outer diameter of the clutch gear portion 18 and the inner diameter of the main gear portion 17 is 12 mm or less.

Further, as shown in Fig. 4, spaces 25 each corresponding to one tooth are defined among the spline teeth 22, and spline teeth 22 are alternately omitted and recessed inward in the circumferential direction.

Fig. 6 is a half-cut plan view of a mode of the transmission gear 16 of the invention.

The transmission gear 16 of Fig. 1 through Fig. 6 has a desired outer shape formed by upsetting the material by hot forging. Further, after forming the main gear portion 17 and the clutch gear portion 18 both having a tooth shape and so on by composite forging of plural hot forgings and cold forgings, the teeth of the main gear portion 17 and the spline teeth 22 having the chamfers 20 at their front ends are formed into a partially fabricated item having predetermined dimensions and precision by cold coining. Then, inclined faces of inverse taper 21 are formed on the spline teeth 22 by cold forging.

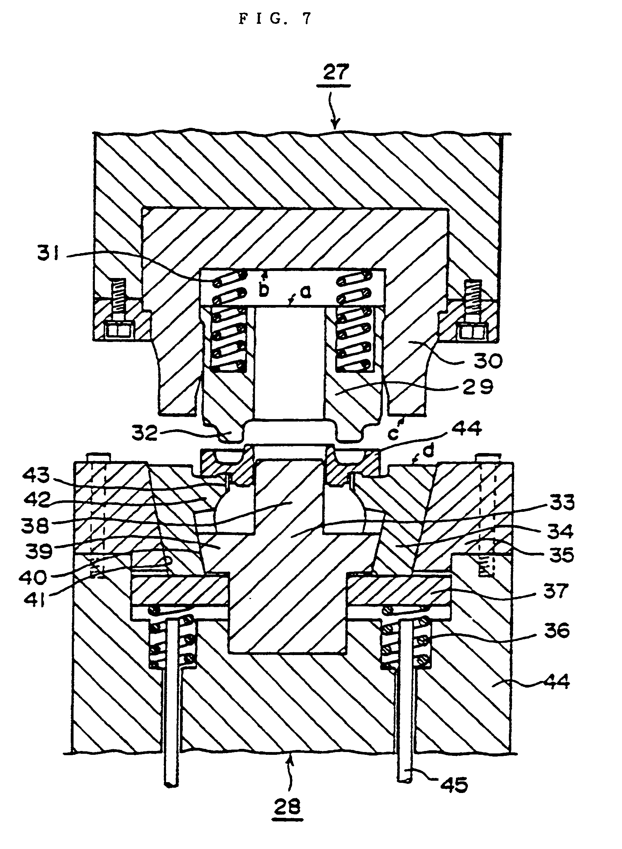

Fig. 7 is a sectional view showing an example of an apparatus for forming the inclined faces of inverse taper 21 on the spline teeth 22, and the apparatus is a press having an upper die 27 and a lower die 28.

The upper die 27 has an outer punch 30 surrounding the outer periphery of an inner punch 29 provided at a lower central portion thereof, and springs 31 are interposed between the upper side of the inner punch 29 and the outer punch 30, the inner punch 29 is slidable upward relative to the upper die 27 by compressing the springs 31, and the lower face of the inner punch 29 is provided with a projection 32 in a ring-like shape.

The lower die 28 has a segment guide 33 provided at an upper central portion, an inverse taper forming segment 34 provided outside the segment guide 33, and a taper die 35 provided outside the inverse taper forming segment 34. A segment receiving plate 37 supported by springs 36 is in contact with lower side of the inverse taper forming segment 34.

A fitting projection 38 directed upward is projected from the center of the segment guide 33, a guide portion 39 is projected horizontally outward from a vertically intermediate portion of the segment guide 33, and the outer periphery of the guide portion 39 is formed with a taper 40 the lower portion of which is inclined toward the center.

The inner periphery of the taper die 35 is formed with a taper 41 inclined at the same angle of inclination as that of the taper 40 of the outer periphery of the guide portion 39 of the segment guide 33, and the inverse taper forming segment 34 is slidably interposed between the taper 41 of the taper die 35 and the taper 40 of the outer periphery of the guide portion 39 of the segment guide 33.

The inverse taper forming segment 34 is divided into pieces in the circumferential direction relative to the segment guide 33, forming arms 42 are projected inward therefrom, and forming teeth 43 described below are provided at the front ends of the forming arms 42.

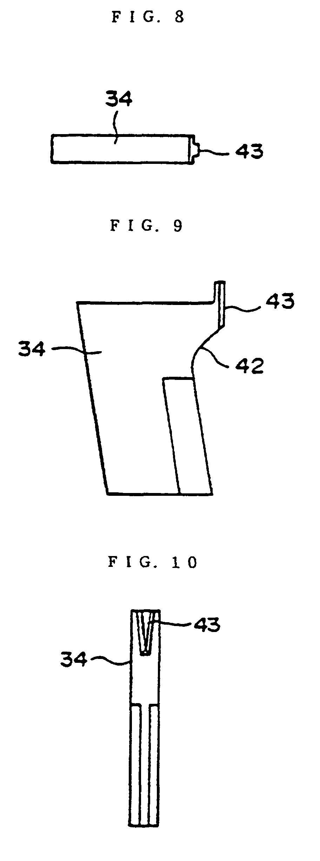

Fig. 8 is a plan view showing an example of the inverse taper forming segment 34, Fig. 9 is a front view of Fig. 8 and Fig. 10 is a right side view of Fig. 8. The forming teeth 43 provided at the front ends of the forming arms 42 (see Fig. 9) has a narrow width on the lower side and a wide width on the upper side, as shown in Fig. 10 and are suitable for forming the inverse taper 21 of each of the spline teeth 22 of the clutch gear portion 18 of the transmission gear 16 shown in Fig. 1 through Fig. 3.

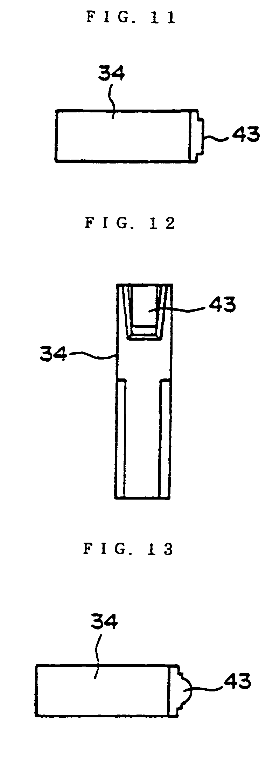

Fig. 11 is a plan view showing another example of the inverse taper forming segment 34, and Fig. 12 is a right side view of Fig. 11. Although the front view thereof is omitted, the segment has the same shape as that of Fig. 9.

Each of the forming teeth 43 of the inverse taper forming segment 34 shown in Fig. 11 and Fig. 12 has a width wider than that shown in Fig. 10 and is suitable for forming the inverse taper (see Fig. 3) 21 of each of the spline teeth 22 of the clutch gear portion 18 of the transmission gear 16 shown in Fig. 4 and Fig. 5.

Fig. 13 is a plan view showing still another example of the inverse taper forming segment 34. Although not shown, the front face shape has the same shape as that of Fig. 9 and the right side face has the same shape as that of Fig. 12.

The forming tooth 43 of the inverse taper forming segment 34 shown in Fig. 13 has a wide width, is provided with a projection bent toward the center and suitable for forming the inverse taper 21 (see Fig. 3) of each of the spline teeth 22 of the clutch gear portion 18 in the transmission gear 16 shown in Fig. 6.

Next, a description will be given of a method of forming the inclined faces of the inverse taper 21 of the spline teeth 22, as shown in Fig. 3, by using the apparatus of Fig. 7 mentioned above.

The inverse taper forming segment 34 of the apparatus of Fig. 7 is the inverse taper forming segment 34 shown in Fig. 8 through Fig. 10 and a partially fabricated item 44 in which the inclined faces of the inverse taper 21 (see Fig. 3) have not been formed yet in each of the spline teeth 22 of the clutch gear portion 18 of the transmission gear 16 shown in Fig. 1 and Fig. 2, is externally fitted to the fitting projection 38 of the segment guide 33 as shown in Fig. 7.

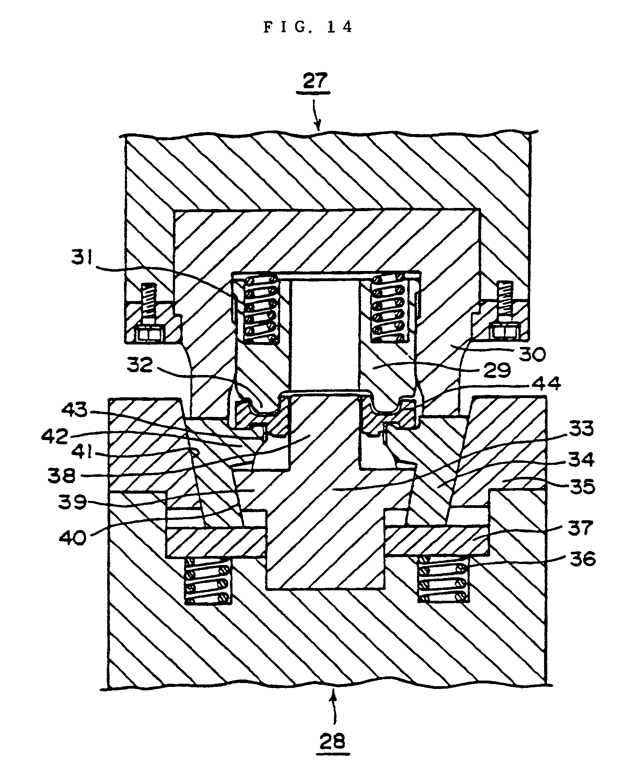

Further, when the upper die 27 is pushed down, as shown in Fig. 14, the projection 32 of the inner punch 29 pushes down the partially fabricated item 44 and the outer punch 30 pushes down the inverse taper forming segment 34.

Thereby, the partially fabricated item 44 is lowered while sliding on the fitting projection 38 and the inverse taper forming segment 34 is slidingly displaced toward the central axis of the partially fabricated item 44 while lowering along the taper 41 of the taper die 35 and the taper 40 of the outer periphery of the guide portion 39 of the segment guide 33. During the displacement, the segment receiving plate 37 is pushed down by the lower end of the inverse taper forming segment 34 and lowered while compressing the springs 36.

When the upper die 27 is slightly pushed down, the springs 31 are compressed and only the outer punch 30 is lowered and the inverse taper forming segment 34 continues to slidingly displace toward the central axis while lowering relative to the partially fabricated item 44.

If the inverse taper forming segment 34 continues to slidingly displace toward the central axis while lowering along with the partially fabricated item 44 as mentioned above, the forming tooth 43 shown in Fig. 8 through Fig. 10 forms, at the clutch gear portion 18 of the transmission gear 16 shown in Fig. 1 and Fig. 2, the inverse taper 21 shown in Fig. 3 on each of the spline teeth 22 of the partially fabricated item 44 in which the inclined faces of the inverse taper 21 (refer to Fig. 3) have not yet been formed in the spline teeth 22.

When the inverse taper forming segment 34 of the apparatus of Fig. 7 is the inverse taper forming segment 34 shown in Fig. 11 and Fig. 12, the partially fabricated item 44 is the type in which the inclined faces of the inverse taper 21 (see Fig. 3) have not yet been formed on each of the spline teeth 22 of the clutch gear portion 18 of the transmission gear 16 shown by Fig. 4 and Fig. 5, and the upper die 27 is pushed down as mentioned above; the inverse taper 21 shown in Fig. 3 can be formed on each of the spline teeth 22 of the partially fabricated item 44 in which the inclined faces of the inverse taper 21 (see Fig. 3) have not been formed yet on each of the spline teeth 22 of the clutch gear portion 18 of the transmission gear 16 shown in Fig. 4 and Fig. 5.

Further, when the inverse taper forming segment 34 of the apparatus of Fig. 7 is the inverse taper forming segment 34 shown by Fig. 13, the partially fabricated item 44 is the type in which the inclined faces of the inverse taper 21 (see Fig. 3) have not been formed yet on each of the spline teeth 22 of the clutch gear portion 18 of the transmission gear 16 shown in Fig. 6, and the upper die 27 is pushed down as mentioned above; the inverse taper 21 shown in Fig. 3 is formed on each of the spline teeth 22 of the partially fabricated item 44 in which the inclined faces of the inverse taper 21 (see Fig. 3) have not been formed yet on each of the spline teeth 22 of the clutch gear portion 18 of the transmission gear 16 shown in Fig. 6, and at the same time, by the forming tooth 43 having a wide width and provided with the bent projection at the center of the inverse taper forming segment 34 shown in Fig. 13, there is carried out finish forming of recessed shapes 26 (see Fig. 6) recessed toward the central axis among the spline teeth 22 provided by omitting part of the teeth in every few teeth.

The apparatus shown in Fig. 7 and Fig. 14 has no pin or the like parts and accordingly, the strength is improved, the structure is simplified, and the price is low.

According to the invention of Claim 1, there is achieved an effect of providing an integrated type gear for a transmission the strength of which is enhanced more than that of the conventional coupling type and the total length is decreased more than that of the conventional integrated type.

According to the invention of Claim 2, the teeth of the clutch gear portion are formed with spaces provided intermittently, and accordingly, there is achieved an effect of providing an integrated type gear for a transmission in which the dimensions in the circumferential direction of teeth of the clutch gear portion are great to thereby improve the strength of the clutch gear portion and the strength is increased with lightweight. Further, when the spaces corresponding to an appropriate number of teeth of the clutch gear portion are defined in a recessed shape bent toward the central axis of the clutch gear portion, there is achieved an effect of constituting the gear in lightweight while maintaining the strength and the life of dies for forming can be improved.

According to the invention of Claim 3, there is achieved an effect of easily forming an integrated gear for a transmission of Claim 1 by an apparatus excellent in strength.

According to the invention of Claim 4, there is achieved an effect of forming an integrated type gear for a transmission of Claim 2 having an improved strength.

## Claims

1. An integrated type gear (18) for a transmission which comprises a main gear portion (17) for a synchronizing mechanism of the transmission and a clutch gear portion (18) formed integrally with a side face of the main gear portion (17), the clutch gear portion provided with inversely tapered spline teeth (22) each having a chamfer at a front end thereof and recessed from a side face (19) of the main gear portion(17), **characterized in that** a difference between an outer diameter (23) of the clutch gear portion (18) and an inner diameter (24) of the main gear portion (17) is 12mm or less.

2. An integrated type gear (16) according to claim 1, **characterized in that** the teeth (22) are provided with intermittent spaces (25) corresponding to an appropriate number of the teeth.

3. A method of forming an integrated type gear (46) for a transmission **characterized in that**: there are provided an upper die (27) and a lower die (28) comprising a segment guide (33) for externally fitting a partially fabricated item (44) in which a clutch gear portion (18) having spline teeth (22) is recessed from a side face (19) of a main gear portion (17) and a difference between an outer diameter (23) of the clutch gear portion (18) and an inner diameter (24) of the main gear portion (17) is 12mm or less, an inverse taper forming segment (34) having forming teeth (43) provided outside the segment guide (33) and on a forming arm (42) and externally fitted to the clutch gear portion (18) of the partially fabricated item (44), the forming teeth (43) being shaped into a narrower width at a side which abuts the chamfer (20) portion of the spline teeth (22) to be formed than the width of the other side which abuts the root portion of the spline teeth to be formed, and a taper die (35) fitted to the outside of the inverse taper forming segment (34) and formed with a taper on the inner peripheral face thereof; after externally fitting the partially fabricated item (44) to the segment guide (33) of the lower die (28), the partially fabricated item (44) is pressed by the upper die (27) and the lower die (28): and both the inverse taper forming segment (34) and the partially fabricated item(44) are lowered to thereby slide the inverse taper forming segment (34) toward the central axis of the partially fabricated item (44) along the inner peripheral face of the taper die (35) and to thereby form inverse tapers on the spline teeth (22) of the clutch gear portion (18) of the partially fabricated item (44) by the teeth of the inverse taper forming segment (34).

4. A method of forming an integrated type gear (18) for a transmission according to claim 3,**characterized in that** the lower die(28) is provided with an inverse taper forming segment (34) so designed that the difference between the outer diameter (23) of the clutch gear portion (18) and the inner diameter (24) of the main gear portion (17) is 12mm or less and the dimension In the circumferential direction of the teeth is large; and that after externally fitting to the segment guide (33) of the lower die (28) the partially fabricated item(44) in which the difference between the outer diameter (23) of the clutch gear portion (18) and the inner diameter (24) of the main gear portion (17) is 12mm or less and intermittent spaces corresponding to an appropriate number of teeth are provided among the teeth, the partially fabricated item (44) is pressed by the upper die (27) and the lower die (28) to thereby form inverse tapers on the spline teeth (22) of the clutch gear portion (18) of the partially fabricated item (44).

## Patentansprüche

1. Zahnrad (18) des integrierten Typs für ein Wechselgetriebe, das einen Hauptzahnradabschnitt (17) für einen Synchronisierungsmechanismus des Wechselgetriebes und einen einstückig mit einer Seitenfläche des Hauptzahnradabschnitts (17) ausgebildeten Kupplungszahnradabschnitt (18) umfasst, wobei der Kupplungszahnradabschnitt mit umgekehrt verjüngten Keilzähnen (22) versehen ist, die jeweils an einem Vorderende davon eine Schrägkante aufweisen und von einer Seitenfläche (19) des Hauptzahnradabschnitts (17) abgesetzt sind,
**dadurch gekennzeichnet, dass**
eine Differenz zwischen einem Außendurchmesser (23) des Kupplungszahnradabschnitts (18) und einem Innendurchmesser (24) des Hauptzahnradabschnitts (17) 12 mm oder weniger beträgt.

2. Zahnrad (16) des integrierten Typs gemäß Anspruch 1, **dadurch gekennzeichnet, dass** die Zähne (22) mit intermittierenden Lücken (25) versehen sind, die einer zweckmäßigen Anzahl der Zähne entsprechen.

3. Verfahren zur Herstellung eines Zahnrads (48) des integrierten Typs für ein Wechselgetriebe,
**dadurch gekennzeichnet, dass**
ein Obergesenk (27) und ein Untergesenk (28) mit einer Segmantführung (33) zur äußeren Anbringung eines teilweise vorgefertigten Teils (44) bereitgestellt werden, in dem ein Keilzähne (22) aufweisender Kupplungszahnradabschnitt (18) von einer Seitenfläche (19) eines Hauptzahnradabschnitts (17) abgesetzt ist und eine Differenz zwischen einem Außendurchmesser (23) des Kupplungszahnradabschnitts (18) und einem Innendurchmesser (24) des Hauptzahnradabschnitts (17) 12 mm oder weniger beträgt, ein eine entgegengesetzte Keilverjüngung formendes Segment (34) mit Formzähnen (43), die außerhalb der Segmentführung (33) und auf einem Formarm (42) vorgesehen und außen an dem Kupplungszahnradabschnitt (18) des teilweise vorgefertigten Teils (44) angebracht sind, wobei die Formzähne (43) auf einer Seite, die an dem Schragkantenabschnitt (20) der zu formenden Keilzähne (22) anliegt, in eine schmalere Breite gebracht sind als die Breite der anderen Seite, die am Fußabschnitt der zu formenden Keilzähne anliegt, und ein an der Außenseite des eine entgegengesetzte Kallverjungung formenden Segmentes (34) angebrachtes und mit einer Verjüngung an dessen Innenumfangsseite ausgebildetes Vorschneideisen (35); nach äußerer Anbringung des teilweise vorgefertigten Teils (44) an der Segmentführung (33) des Untergesenks (28) das teilweise vorgefertigte Teil (44) von dem Obergesenk (27) und dem Untergesenk (28) gepresst wird; und sowohl das eine entgegengesetzte Keilverjüngung formende Segment (34) als auch das teilweise vorgefertigte Teil (44) heruntergedrückt werden, um **dadurch** das eine entgegengesetzte Keilverjüngung formende Segment (34) an der Innenumfangsseite des Vorschneideisens (35) entlang zur Mittelachse des teilweise vorgefertigten Teils (44) hin zu verschieben und **dadurch** mit den Zähnen des eine entgegengesetzte Keilvarjüngung formenden Segmentes (34) umgekehrte Verjüngungen an den Keilzähnen (22) des Kupplungszahnradabschnitts (18) des teilweise vorgefertigten Teils (44) zu formen.

4. Verfahren zur Herstellung eines Zahnrads (16) des integrierten Typs für ein Wechselgetriebe gemäß Anspruch 3, **dadurch gekennzeichnet, dass** das Untergesenk (28) mit einem eine entgegengesetzte Keilverjüngung formenden Segment (34) bereitgestellt wird, das so ausgelegt ist, dass die Differenz zwischen dem Außendurchmesser (23) des Kupplungszahnradabschnitts (18) und dem Innendurchmesser (24) des Hauptzahnradabschnitts (17) 12 mm oder weniger beträgt und die Abmessung in Umfangsrichtung der Zähne groß ist; und dass nach der äußeren Anbringung des teilweise vorgefertigten Teils (44), in dem die Differenz zwischen dem Außendurchmesser (23) des Kupplungszahnradabschnitts (18) und dem Innendurchmesser (24) des Hauptzahnradabschnitts (17) 12 mm oder weniger ist und intermittierende Lücken entsprechend einer zweckmäßigen Anzahl von Zähnen zwischen den Zähnen vorgesehen sind, an der Segmentführung (33) des Untergesenks (28) das teilweise vorgefertigte Teil (44) von dem Obergesenk (27) und dem Untergesenk (28) gepresst wird, um **dadurch** umgekehrte Verjüngungen an den Keilzähnen (22) des Kupplungszahnradabschnitts (18) des teilweise vorgefertigten Teils (44) zu formen.

## Revendications

1. Engrenage de type intégré (18) pour une transmission qui comprend une partie d'engrenage principal (17) pour un mécanisme de synchronisation de la transmission et une partie de pignon d'accouplement (18) formée intégralement avec une face latérale de la partie d'engrenage principal (17), la partie de pignon d'accouplement étant munie de dents de cannelure (22) inclinées inversement chacune ayant un chanfrein en une extrémité avant de celles-ci, et en retrait par rapport à une face latérale (19) de la partie d'engrenage principal (17), **caractérisé en ce qu'**une différence entre un diamètre extérieur (23) de la partie de pignon d'accouplement (18) et un diamètre intérieur (24) de la partie d'engrenage principal (17) est de 12 mm ou moins.

2. Engrenage de type intégré (18) selon la revendication 1, **caractérisé en ce que** les dents de cannelure (22) sont munles d'espaces intermittents (25) correspondant à un nombre approprié de dents.

3. Procédé de façonnage d'un engrenage de type intégré (46) pour une transmission **caractérisé en ce que** ; il comprend une matrice supérieure (27) et une matrice intérieure (28) comprenant un guide de segment (33) pour monter extérieurement une pièce ébauchée (44) dans laquelle une partie de pignon d'accouplement (18) ayant des dents de cannelure (22) est en retrait par rapport à une face latérale (19) d'une partie d'engrenage principal (17) et une différence entre un diamètre extérieur (23) de la partie de pignon d'accouplement (18) et un diamètre intérieur (24) de la partie d'engrenage principal (17) est de 12 mm ou moins, un segment de façonnage de dépouille inverse (34) ayant des dents de façonnage (43) placées à l'extérieur du guide de segment (33) et sur un bras de façonnage (42) et monté extérieurement sur la partie de pignon d'accouplement (18) de la pièce ébauchée (44), les dents de façonnage (43) étant formées avec une largeur plus étroite d'un côté qui vient en butée contre la partie de chanfrein (20) des dents de cannelure (22) à former que la largeur de l'autre côté qui vient en butée contre la partie de pied des dents de cannelure à former, et une matrice inclinée (35) montée sur l'extérieur du segment de façonnage de dépouille inverse (34) et formée avec une pente sur sa face périphérique intérieure de celui-ci ; après avoir monté extérieurement la pièce ébauchée (44) sur le guide de segment (33) de la matrice inférieure (28) la pièce ébauchée (44) est pressée par la matrice supérieure (27) et la matrice inférieure (28) ; et à la fois le segment de façonnage de dépouille inverse (34) et la pièce ébauchée (44) sont abaissés pour faire coulisser ainsi le segment de façonnage de dépouille inverse (34) vers l'axe central de la pièce ébauchée (44) le long de la face périphérique intérieure de la matrice inclinée (35) et pour ainsi former des dépouilles inverses sur les dents de cannelure de la partie de pignon d'accouplement (18) de la pièce ébauchée 44 par les dents du segment de façonnage de dépouille inverse (34).

4. Procédé de façonnage d'un engrenage de type intégré (16) pour une transmission selon la revendication 3, **caractérisé en ce que** la matrice inférieure (28) est munie d'un segment de façonnage de dépouille inverse (34) conçu pour que la différence entre le diamètre extérieur (23) de la partie de pignon d'accouplement (18) et le diamètre intérieur (24) de la partie d'engrenage principal (17) soit de 12 mm ou moins et la dimension dans la direction circonférentielle des dents soit grande ; et **en ce qu'**après avoir monté extérieurement sur le guide de segment (33) de la matrice inférieure (28) la pièce ébauchée (44) dans laquelle la différence entre le diamètre extérieur (23) de la partie de pignon d'accouplement (18) et le diamètre intérieur (24) de la partie d'engrenage principal (17) est de 12 mm ou moins et des espaces intermittents correspondant à un nombre approprié de dents sont placés parmi les dents, la pièce ébauchée (44) est pressée par la matrice supérieure (27) et la matrice inférieure (28) pour ainsi former des pentes sur les dents de cannelure (22) de la partie de pignon d'accouplement (18) de la pièce ébauchée (44).
